# EUROPEAN PATENT SPECIFICATION

(11) **EP 4 315 747 B1**
(45) Date of publication and mention of the grant of the patent: **11.12.2024**
(21) Application number: 22716295.5
(22) Date of filing: 15.03.2022
(51) Int. Cl.: H04L 9/40

(54) **TOKEN MANAGEMENT FOR ASYNCHRONOUS REQUEST-REPLY**
TOKENVERWALTUNG FÜR ASYNCHRONE ANFRAGE-ANTWORT
GESTION DE JETON POUR UNE RÉPONSE À UNE REQUÊTE ASYNCHRONE

(30) Priority: 31.03.2021 US 202163168852 P; 07.10.2021 US 202117496627
(43) Date of publication of application: 07.02.2024
(73) Proprietor: Microsoft Technology Licensing, LLC, Redmond, WA 98052-6399 (US)
(72) Inventor: AJMERA, Prasham Rajeshbhai, Redmond, Washington 98052-6399 (US); GRYKO, Izydor, Redmond, Washington 98052-6399 (US); MEJIA VALENCIA, Richard Jose, Redmond, Washington 98052-6399 (US)
(74) Representative: Grünecker Patent- und Rechtsanwälte PartG mbB
(86) International application number: PCT/US2022/020279
(87) International publication number: WO 2022/212023

(56) References cited:
- WO-A1-2016/061520
- US-A1- 2019 102 423
- US-A1- 2019 230 081
- IDESKOG JACOB: "How to Handle Batch Processing with OAuth 2.0 | Nordic APIs", 24 January 2017 (2017-01-24), XP055928737, Retrieved from the Internet <URL:https://nordicapis.com/how-to-handle-batch-processing-with-oauth-2-0/> [retrieved on 20220608]
- ANGELO JOÃO: "How to handle user token expiration on long running asynchronous jobs?", 18 September 2016 (2016-09-18), XP055928046, Retrieved from the Internet <URL:https://security.stackexchange.com/questions/142292/how-to-handle-user-token-expiration-on-long-running-asynchronous-jobs> [retrieved on 20220603]

## Description

### BACKGROUND

Identity and access management (IAM) typically includes a framework of policies and technologies for ensuring that authorized people in an enterprise have the appropriate access to technology resources. Authentication (AuthN) and authorization (AuthZ) are two processes in IAM where AuthN verifies the identity of a user and AuthZ defines, grants, and enforces specific privileges of a user. Tokens are often used for AuthN and AuthZ. For example, a client application may depend on a remote application program interface (API) to execute a remote application which may be running in a multitenant environment. The user must present proper tokens for AuthN and AuthZ to the API to gain access to the remote application and to have the remote application perform desired operations. Commonly these API calls take place over Hypertext Transfer Protocol (HTTP) and follow Representational State Transfer (REST) semantics and can be done synchronously, e.g., client constructs an HTTP structure, sends a request, and waits for a response, or asynchronously, client constructs an HTTP structure, sends a request, and moves on and is notified when the response arrives.

When the client application is making an API call, in most cases, the API may respond to a request from a client application quickly, such as on the order of 100 milliseconds (ms) or less. However, in some situations execution of the request may exceed the token expiration, which may be due to a variety of factors, such as current load, time for backend processing of the request, size of the request payload, etc. In these situations, the token becomes invalid. As a result, the request from the client application cannot be successfully performed.

Ideskog Jakob: "How to Handle Batch Processing with OAuth 2.0 | Nordic APIs", 24 January 2017 (2017-01-24), relates to how to handle batch processing with OAuth 2.0. OAuth 2.0 isn't really designed for batch processing. OAuth is typically used more synchronously - as in, you send a request and you get an immediate response. Dealing with OAuth, you usually have the communication channel open. Batch processes, on the other hand, are often asynchronous, meaning that you may not have an open channel as operations occur over a longer time scale. Though many API providers are moving toward flashy RESTful microservices, asynchronous behavior in mobile APIs or enterprise service architectures still exist, and need to be dealt with in a secure and scalable method that considers the identity of the request along each step of the way. When the action is finally triggered, often the identity of the final call is not coupled with the initial call in any way. Using a typical OAuth flow here is awkward, since OAuth tokens are intended to be very short lived, meaning they shouldn't be stored in the queue for an indefinite batch job (see first and third paragraph on page 2). The permissions of the access token are downscoped into a single action that can rest safely in the queue. This does require a little bit more action on the part of the server. It will take the savings operation data, and sign it, using the OAuth server key to create a signature out of that content. It will then respond with an access token that is more Long Lived (LL), which we'll call JWT Access Token LL.

Angelo João: "How to handle user token expiration on long running asynchronous jobs?", 18 September 2016 (2016-09-18), relates to how to handle user token expiration on long running asynchronous jobs. Either, the OAuth 2.0 client credentials grant can be used in the authorization server so that the back-end services can request tokens on their own behalf without involving the user. Alternatively, a token exchange mechanism can be supported that allows for a back-end service to exchange the received access token with another one that allows to call other services using either user impersonation or delegation. Since the tokens were being issued to trusted back-end services and would never leave the server-side boundary, the lifetime of the token obtained could be much larger than the one used in the access token available to the web application which would also solve the expiration issue.

US 2019/102423 A1 relates to a system and method for providing an interface for a blockchain cloud service. A system and method implement a distributed ledger as a Blockchain Cloud Service (BCS). The BCS includes a complete set of infrastructure services and embedded resources: compute, containers, storage, identity management, and event streaming to enable the setup and execution of a production-ready blockchain. The BCS provisions an underlying infrastructure with the required blockchain network components, interface, a representational state transfer (REST) proxy service component, and a management console component, in response to an administrator specifying one or more parameters.

### BRIEF DESCRIPTION OF DRAWINGS

It is the object of the present invention to improve efficiency of executing long-lasting asynchronous procedures when a token expires during the execution.

This object is solved by the subject matter of the independent claims.

Preferred embodiments are defined by the dependent claims.

Features of the present disclosure are illustrated by way of examples shown in the following figures. In the following figures, like numerals indicate like elements, in which:
Figure 1 shows an end-to-end asynchronous request-reply flow, according to an example of the present disclosure.
Figure 2 illustrates a flow chart for managing token expiration for the asynchronous request-reply flow, according to an example of the present disclosure.
Figure 3 shows a system block diagram, according to an example of the present disclosure.
Figure 4 shows operations of a background request processor, according to an example of the present disclosure.
Figure 5 shows a block diagram for a computer-implemented method to manage execution of a request that outlasts token expiration in an asynchronous request-reply pattern, according to an example of the present disclosure.

### DETAILED DESCRIPTION

For simplicity and illustrative purposes, the present disclosure is described by referring to examples thereof. In the following description, numerous specific details are set forth in order to provide a thorough understanding of the present disclosure. It will be readily apparent however that the present disclosure may be practiced without limitation to these specific details. In other instances, some methods and structures have not been described in detail so as not to unnecessarily obscure the present disclosure. Throughout the present disclosure, the terms "a" and "an" are intended to denote at least one of a particular element. As used herein, the term "includes" means includes but not limited to, the term "including" means including but not limited to. The term "based on" means based at least in part on.

According to an example of the present disclosure, token management is provided for an asynchronous request-reply pattern of communication that can be employed between a client application and a remote API to which the client application makes API calls. The asynchronous request-reply pattern allows the API to absolve itself from providing an immediate response to a request, and instead provides a way to provide a response later in time.

Furthermore, the token management includes a process for managing long-lasting procedures that are executed for a request and which otherwise may be difficult to manage due to the expiration of a token during the long-lasting procedure. Tokens are required for AuthN and AuthZ. A token has an expiration. Often, the default is set at one hour but expiration can be set at shorter time periods, such as within seconds or minutes. If a request in the asynchronous request-reply pattern requires execution of backend processes that takes longer than the expiration period of the token, it can result in failed execution of the requested operation that is requested in the API call to the remote API. To obviate the issue with token expiration, some systems may create a certificate that gives blind trust to the user, such as authorizes rights for the user for an extended period of time that exceeds the expiration of the token. However, this creates a security risk, because the certificate holder is allowed to perform various operations for an extended period of time even if the token is invalid.

According to an example of the present disclosure, token expiration is handled in a much more secure manner. For example, after a request from a client is accepted, the client is provided with a tracking key and a new location, such as a location of a status checker API, for checking the status of the request. The client, after a stated period of time, can send a status request to the status checker API along with the tracking key. When the client sends a request to a new location, such as the status request being sent to the status checker API instead of the initial request being sent to the remote API, the client automatically includes a new token according to existing client procedure. This new token is then used to determine status and respond to the client status request and to process the request if the initial token is expired. Accordingly, if the initial token is expired, the new token, which is unexpired, is available for authorization to process the request, and this process may be repeated as needed until the processing of the requested operation is completed. By way of this process, token expiration is managed in a more secure manner than issuing a certificate that allows the request to be processed despite an expired token. Furthermore, the client is not required to re-submit the initial request, so the client 101 is not required to perform any additional operations.

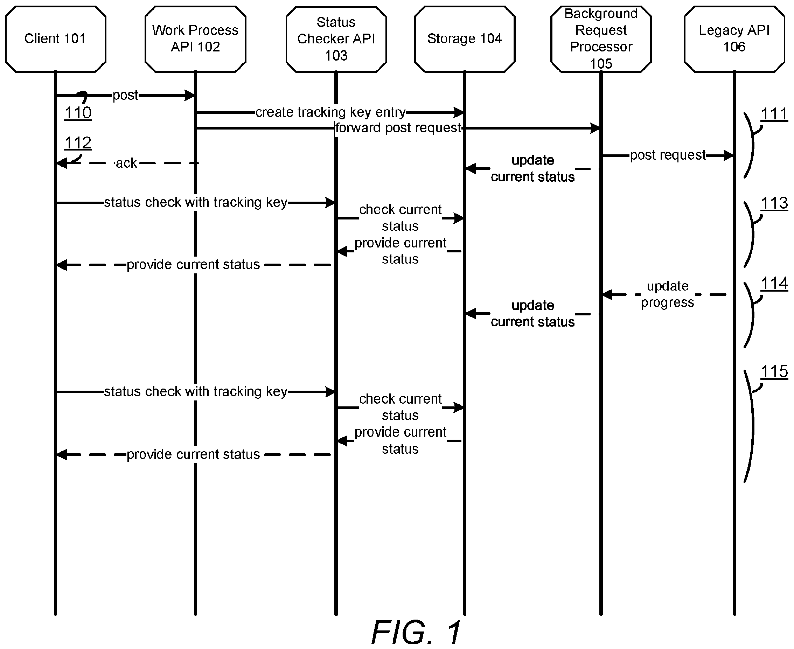

Figure 1 shows an end-to-end asynchronous request-reply message flow according to an example of the present disclosure. Client 101 may include an application, also referred to as a client application, executed by a processor. In an example, the client 101 comprises code running in a web browser, or in another example the client 101 may include a standalone application that may not need a web browser to run. The client 101 communicates with remote APIs, e.g., API 102 and status checker API 103, such as to execute business logic or to perform other operations. The API 102 may also be referred to herein as a work process API. In an example, API 102, status checker API 103, storage 104, legacy API 106 and background request processor 105, which are described in detail below, are provided on a cloud of a cloud provider, and the client 101 accesses the cloud via the APIs to execute the request. The client 101 can access the APIs and the cloud via a network not shown.

The client 101 makes API calls to API 102 which by way of example may take place over the HTTP(S) protocol and follow REST semantics. In a running example which is used herein to describe the end-to-end asynchronous request-reply flow, the API 102 is for a tenant order service to order cloud resources from a cloud provider, such as orders for creating virtual machines (VMs), assigning database servers, performing billing tasks, etc.

At 110, the client 101 makes an API call to the API 102, e.g., an HTTP post request. The API call includes a request to perform an operation, which may trigger a long-running operation on the backend. For example, the request in the API call includes an order from a tenant for multiple VMs with particular images and database servers to be provided to the tenant by the cloud provider of the tenant. The request also includes a token, also referred to as an authorization token. The token may be one or more tokens used for AuthN and/or AuthZ. Also, the request may include a tag that identifies itself as an asynchronous request as opposed to a synchronous request. The API 102 can check for other errors in the request. Also, the API 102 can validate the client 101 and the request using the token, or the client 101 and the request may be subsequently validated using the token by the background request processor 105 before the requested operation in the request is executed by a request processing endpoint. The API 102 responds with an acknowledgement if the request is accepted, such as shown at 112, and the API 102 performs other operations, shown at 111, to have the request processed. If the request is not accepted, the API 102 responds with an indication that the request is not accepted as soon as possible, so the user can take corrective action as needed.

As indicated above, if the request is accepted for processing by the API 102, the operations are performed at 111 to get the request processed. For example, the API 102 creates a tracking key entry in storage 104 to track the progress of the order, which may include a requested operation, made in the request. Accordingly, the API 102 creates a tracking key for the request which is stored in storage 104. Storage 104 may include storage of the cloud provider that is accessible by the APIs and background request processor 105 shown in figure 1. In an example, the storage 104 may include object storage (e.g., blob storage) in the cloud. The API 102 forwards the order to the background request processor 105 for execution, shown as forward post request. The background request processor 105 may forward the order to a legacy API 106 if needed for execution, e.g., post request to legacy API 106. The background request processor 105 can update the progress of the execution of the order of the request from client in the storage 104, such as by storing status codes in the storage 104 for the corresponding tracking key of the request. The status codes indicate the progress of the processing of the request. For example, the storage 104 may store a status code, such as for waiting, processing, finished, or error (when listener can't process it). At 112, the API 102 responds back to the client 101 with an acknowledgment. The acknowledgment includes (1) the status code, such as HTTP status code 202 indicating that the request has been accepted for processing but is not completed (in fact processing may not have been started), (2) the tracking key, (3) a location, such as a URL for status checker API 103, for checking the ongoing status of the order, and (4) a retry-after value indicating an amount of time to wait before checking the location for the status of the order. Subsequently, the client 101 can send a message, including the tracking key, to the location, such as the location of status checker API 103 instead of API 102, after waiting for the amount of time specified by the retry-after value to check on the progress of the execution of the order. Location may refer to a URL, IP address or another type of address that is used to identify a destination for a message or request that may be sent over a network. The operations performed at 111 may be performed by the API 102, status checker API 103, the storage 104, the background request processor 105, and the legacy API 106. The API 102, status checker API 103, the storage 104, the background request processor 105, and the legacy API 106 may comprise machine readable instructions executable by a processor on different servers, but it will be apparent to one of ordinary skill in the art that one or more of these elements may reside on the same server. The storage 104 may include storage in a cloud environment as was indicated above.

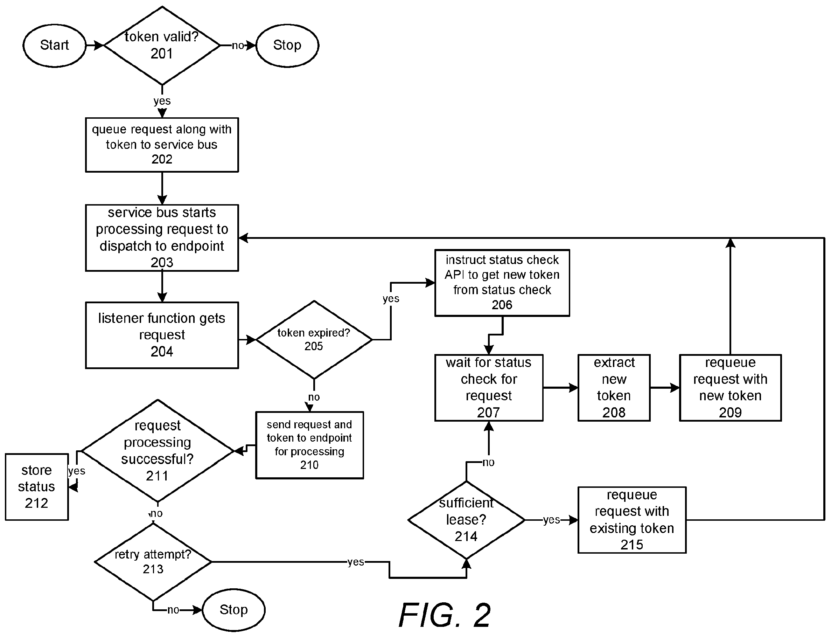

At 113, operations are performed to check the status of the processing of the request that was initially made at 110, such as the status of the order for the VMs and database servers. For example, the client 101 sends a status check (e.g., HTTP get message), including the tracking key, to the status checker API 103 after waiting for the amount of time specified by the retry-after value to check on the progress of the order. Because the client 101 is sending the status check to a new location, such as sending the status check to the status checker API 103 instead of the API 102, the client 101 includes a new token in the status check. This new token may be used for processing the status check and for processing the execution of the order if the original token provided by the client 101 at 110 is expired, as is further described below with respect to figure 2 and other figures. The status checker API 103 uses the tracking key provided in the status check to check the current status of the order in the storage 104. The background request processor 105 may have previously updated the current status in the storage 104 with a status code indicating that the execution of the order is in progress, such as shown at 111, and, at 113, the status checker API 103 retrieves the code indicating the current status from the storage 104 and sends it back to the client 101 along with a retry-after value and the URL for the status checker API for the client 101 to subsequently check the status of the initial request.

At 114, the legacy API 106 updates the progress of the processing of the request. For example, order processing is completed and the legacy API 106 sends a progress update to the background request processor 105 to indicate that the processing is finished. The background request processor 105 updates the storage 104 to indicate that the current status of the order is completed. At 115, the client 101 checks the status of the order again, such as similarly described with respect to 113. For example, the client 101 sends a status check (e.g., HTTP get message), including the tracking key, to the status checker API 103 after waiting for the amount of time specified by the retry-after value to check on the progress of the order. The status checker API 103 retrieves the code indicating finished from the storage 104 using the tracking key and sends it back to the client 101.

Figure 2 illustrates a flow chart for managing token expiration for the asynchronous request-reply flow, according to an example of the present disclosure. The steps of figure 2 may be performed by the background request processor 105. Referring back to figure 1, in the running example discussed above, the initial request at 110 includes an order for VMs and database servers to be provided to a tenant of a cloud provider. The execution of the order may take longer than the expiration time of the token provided by the client 101 at 110. To prevent the order from not being processed due to token expiration, the new token provided by the client 110 at 113 is used to continue processing of the order if the initial token expired, as is further discussed below.

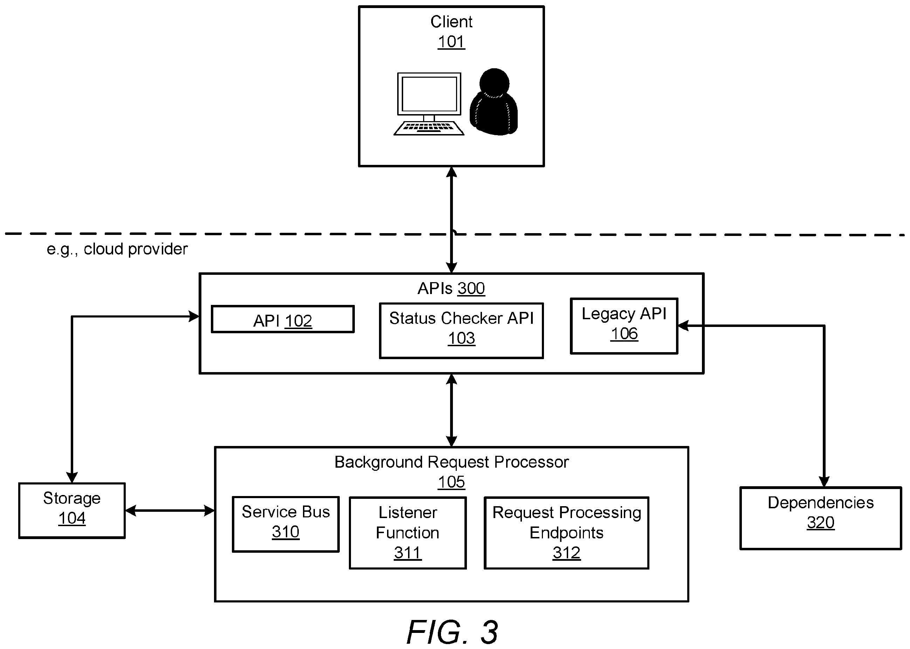

At 201, the background request processor 105 checks whether the token provided by the client 101 is valid. This may include a validation for AuthN and AuthZ. For example, the token was previously extracted from a request sent from the client 101 and stored in the storage 104, and the background request processor 105 validates the token for AuthN and AuthZ. If the token is valid, the request, such as the requested order for VMs and database servers, is queued on a service bus, such as service bus 310 shown in figure 3, at 202, and, at 203, the request is processed by the service bus to dispatch to a request processing endpoint, such as one of the request processing endpoints 312 shown in figure 3, that can process the request. For example, the background request processor 105 may include a service bus to handle a high volume of incoming requests and to dispatch the requests to proper endpoints for servicing the requests. In an example, the service bus implements topics for message brokering and enables multiple receivers or request processing endpoints to process different messages based on topic at any given point of time. This helps with surges in requests and keeps total turnaround time for any operation at a minimum. Also, the background request processor 105 includes a listener function, such as listener function 311 shown in figure 3, that receives the request at 204 and checks whether the token is expired at 205. If the listener function determines the token is not expired, the request and the token are submitted to a request processing endpoint that can process the request. However, if the token is expired, the request cannot be executed. To overcome the issue of an expired token, the listener function acquires a new token from the status checker API 103 at 206. For example, the listener function instructs the status checker API 103 to get the new token at 206 when the status check is received, the status checker API waits for the status check from the client 101 at 207 and extracts the new token at 208 when the status check is received, and requeues the request for the order with the new token at 209. The new token that is not expired may be stored in the storage 104 so the request for the order can be executed by the proper request processing endpoint. In the running example of the request including the order for creating VMs and assigning database servers, the proper endpoint may be a provisioning endpoint comprised of a server or VM of the cloud provider that is available and capable of executing the order. By way of steps 206-209, token expiration is managed without issuing a certificate that allows the request to be processed despite an expired token. Also, the client 101 is not required to re-submit the request with the initial order, so the client 101 is not required to perform any additional operations.

At 205, if the token is not expired, then the listener function decrypts the token and submits it with the request to the endpoint that will execute the request at 210. At 211, if the order execution is determined to be successful, then, at 212, a response is stored in the storage 104. For example, the background request processor 105 updates the storage 104 with a status code for the request indicating the order is finished. Then, the status checker API 103 can retrieve the status code from the storage 104 and send the response to the client 110 indicating the request is finished processing, such as shown at 115 in figure 1. At 211, if the order execution is determined not to be successful, then, at 213, a determination is made as to whether the number of attempts is greater than a threshold. If so, order execution is terminated and status may be updated accordingly in the storage 104 so the client 101 can be notified. If the number of attempts does not exceed the threshold as determined at 213, then, at 214, a determination is made as to whether the token has sufficient lease. For example, the amount of time left until expiration of the token is determined The amount of time left until expiration of the token must be sufficient to complete processing of the request. If the amount of time left until expiration of the token is considered insufficient, such as by comparing the amount of time left until expiration of the token to average times or another preset threshold time to complete requests of a particular type, the token is determined to have insufficient lease. If the token lease is determined to be insufficient at 214, the processing continues to step 207 where the new token is extracted from a recent client status check such as described above. If the token lease is determined to be sufficient at 214, the request is requeued to the service bus with the existing token at 215.

Figure 3 shows a system block diagram of the components described above with respect to figures 1-2, according to an example of the present disclosure. Client 101 may communicate with APIs of API 300, such as API 102 and status checker API 103 to submit requests and status checks such as described above. The client 101 may communicate with the APIs over a network, not shown. The client 101 may include a web application or a standalone application executed by a processor of a computer.

The storage 104 is used for request tracking and storing status. It follows the below-described schema. The storage 104 stores a tracking key used to identify the user when the client 101 sends a status check. The storage 104 also stores the state of a request, such as waiting, processing, finished, and error (e.g., when the listener function 311 can't process the request). The storage 104 also stores a status code, such as an HTTP status code that is returned to the client 101. The storage 104 also stores a number of status checks, which represent how many times the status check API 103 has checked for given request status. The storage 104 also stores a response (once available) for a current request. This can represent successful response provided by an underlying API or error message. The storage 104 also stores a number of requeuings, such as how many times the listener function 311 must requeue a request back to the service bus. The storage 104 also stores the encrypted token, and a timestamp for each update, such as for analytics purposes. In an example, the storage 104 is a cloud storage of the cloud provider that supports the order service for tenants to order cloud resources.

The background request processor 105 may include service bus 210, listener function 311 and request processing endpoints 312. In an example, the request processing endpoints 312 may be external to the background request processor 105, and the listener function 311 and/or service bus 310 send requests to the appropriate request processing endpoints to process the requests queued on the service bus 310. The operations performed by the service bus 310 and the listener function 311 are further described above with respect to figure 2. The service bus 310 and the listener function 311 may include machine readable instructions executed by a processor. The request processing endpoints 312 may include hardware and software for executing requests. For example, assuming the client 101 sends requests to a cloud provider for managing virtual resources, the request processing endpoints 312 perform the requests, such as provisioning and deprovisioning cloud resources for a tenant, etc.

The legacy API 106 may be called by the background request processor 105 to execute a request. In an example, the API 102 is for an order service that client 101 interacts with to order resources from the cloud provider. The order service may interact with customers and have dependencies 320 on other downstream services. The background request processor 105 may make API calls to the legacy API 106 when a downstream service is required to execute an order. In some instances, the dependencies 320 have low reliability due to scaling constraints or other factors. By using the legacy API 106, the order service can be decoupled from less reliable dependencies. This way the order service can be shielded from reliability dips caused by the dependencies 320. Thus, a buffer is provided between the order service or another service provided by the background request processor 105 and dependency failures.

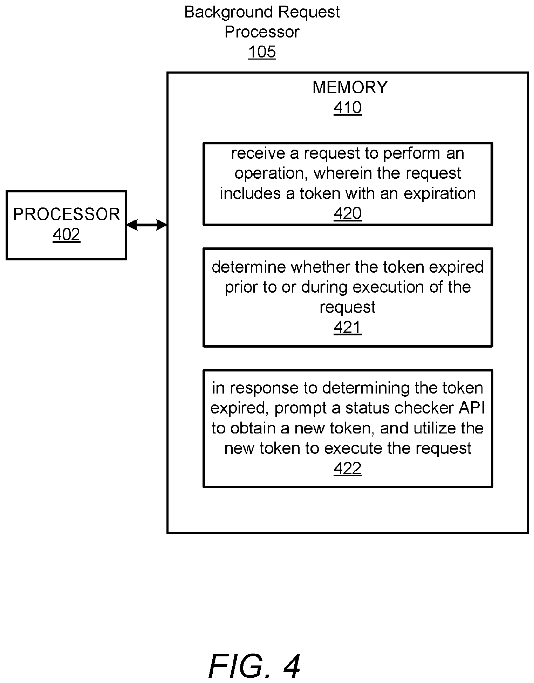

Figure 4 shows a block diagram for the background request processor 105, according to an example of the present disclosure. The processor 402 may include a single or multiple hardware processors or other hardware processing circuit, to execute the methods, functions, and other processes described herein. These methods, functions, and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory). The memory 410 may include one or more storage devices, such as RAMs, where the machine-readable instructions and data for a processor may reside during runtime. Also, APIs 300 and other processes described herein may comprise machine readable instructions stored on a non-transitory machine readable medium and executed by a hardware processor. Referring to the block diagram shown in figure 4, the memory 410 may include machine readable instructions executable by the processor 402. The machine-readable instructions may include instructions 420 to receive a request to perform an operation, wherein the request includes a token with an expiration; instructions 421 to determine whether the token expired prior to or during execution of the request; and instructions 422 to in response to determining the token expired, prompt status checker API 103 to obtain a new token, and utilize the new token to execute the request.

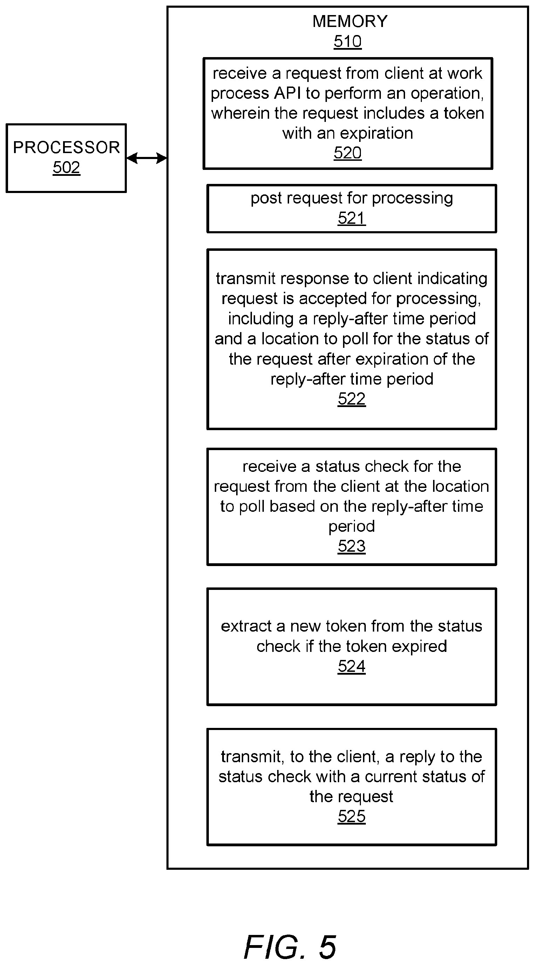

Figure 5 shows a block diagram for a computer-implemented method to manage execution of a request that outlasts token expiration in an asynchronous request-reply pattern, according to an example of the present disclosure. The computer-implemented method is described by way of example as being performed by one or more of the components shown in figures 1 and 3. At 520, a request is received from client 101 at work process API 102 to perform an operation, wherein the request includes a token with an expiration. At 521, the request is posted for processing. For example, the request is posted to service bus 310 so it can be processed by a request processing endpoint. At 522, a response is transmitted to the client 101 indicating the response is accepted for processing, wherein the response includes a reply-after time period, and a location to poll for the status of the request after expiration of the reply-after time period, and wherein the location to poll is different from the work process API. At 523, a status check for the request is received from the client 101 at the location to poll, e.g., the status checker API 103, based on the reply-after time period. At 524, a new token is from the status check if the token is expired. At 524, a reply to the status check is transmitted to the client 101 with a current status of the request. The computer implemented method may be executed by processor 502 which may include a single or multiple hardware processors or other hardware processing circuit, to execute the methods, functions, and other processes described herein. The steps of the method may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory). The memory 510 may include one or more storage devices, such as RAMs, where the machine-readable instructions and data for a processor may reside during runtime.

What has been described and illustrated herein is an example along with some of its variations. The terms, descriptions, and figures used herein are set forth by way of illustration only and are not meant as limitations. Many variations are possible within the scope of the subject matter, which is intended to be defined by the following claims.

## Claims

1. A system operable to manage execution of a request that outlasts token expiration in an asynchronous request-reply pattern, the system comprising:
at least one hardware processor;
a work process application program interface, API, executed by the at least one hardware processor to:
receive (520) a request from a client to perform an operation, wherein the request includes a token with an expiration;
create a tracking key for the request;
post (521) the request for processing; and
transmit (522) a response to the client in response to accepting the request, wherein the response includes a reply-after time period, the tracking key, and a location to poll for a status of the request after expiration of the reply-after time period; and
a status checker API executed by the at least one hardware processor to:
receive (523) a status check for the request from the client based on the reply-after time period and the location to poll, wherein the status check includes the tracking key;
check the status of the request using the tracking key;
extract (524) a new token from the status check based on the new token being needed to execute the request; and
send (525) a reply to the status check with a current status of the request.

2. The system of claim 1, further comprising:
a background request processor executed by the at least one hardware processor, the background request processor to:
determine whether the token expired prior to execution of the request; and
in response to determining the token expired, prompt the status checker API to obtain the new token from the received status check, and utilize the new token to execute the request; and
a storage to store the token, the new token, the tracking key, and the current status of the request.

3. The system of claim 2, wherein the status checker API compares the tracking key received in the status check with the tracking key stored in the storage, wherein the tracking key is initially stored in the storage responsive to receiving the request, in order to check the status of the request.

4. The system of claim 2, wherein the background request processor updates the current status of the request in the storage.

5. The system of claim 2, wherein to determine whether the token expired prior to execution of the request, the background request processor is to:
determine whether the token is expired; or
determine whether the token has sufficient lease to complete the request.

6. The system of claim 1, wherein the token and the new token are validated prior to processing the request and the status check.

7. The system of claim 6, wherein the token is validated for at least one of authentication, AuthN, and authorization, AuthZ, in an identity and access management process.

8. The system of claim 1, wherein the request is from a tenant of a cloud provider and the request comprises an order for resources from the cloud provider.

9. The system of claim 1, wherein the request comprises a request for the operation to be performed by an application hosted on a cloud.

10. The system of claim 1, wherein to extract a new token from the status check based on the new token being needed to execute the request, the status checker API extracts the new token from the status check responsive to a prompt from a background request processor.

11. A computer-implemented method to manage execution of a request that outlasts token expiration in an asynchronous request-reply pattern, the method comprising:
receiving (520) a request from a client to perform an operation at a work process application program interface, API, wherein the request includes a token with an expiration;
posting (521) the request for processing;
transmitting (522) a response to the client indicating the response is accepted for processing, the response including a reply-after time period and a location to poll for a status of the request after expiration of the reply-after time period,
wherein the location to poll is different than a location of the work process API;
receiving (523) a status check for the request from the client at the location to poll based on the reply-after time period;
extracting (524) a new token from the status check based at least on the token having expired; and
transmitting (525), to the client, a reply to the status check with a current status of the request.

12. The computer-implemented method of claim 11, wherein the location to poll comprises a status checker API, and the method further comprises:
determining, by the status checker API, whether the token is expired prior to execution of the request; and
in response to determining the token expired, prompting the status checker API to obtain the new token from the received status check to execute the request.

13. The computer-implemented method of claim 12, comprising:
storing the new token and the current status of the request in a storage accessible by the status checker API; and
retrieving, by the status checker API, the current status of the request to provide to the client.

14. The computer-implemented method of claim 13, comprising:
storing a tracking key in the storage responsive to receiving the request from the client at the work process API, wherein the stored tracking key facilitates subsequent checking of the status of the request.

15. The computer-implemented method of claim 11, wherein the request is from a tenant of a cloud provider and the request comprises an order for resources from the cloud provider.

## Patentansprüche

1. System, das die Ausführung einer über die Ablauffrist des Tokens hinaus andauernden Anfrage in einem asynchronen Anfrage-Antwort-Muster verwaltet, wobei das System Folgendes umfasst:
mindestens einen Hardwareprozessor;
eine Anwendungsprogramm-Schnittstelle, API, eines Arbeitsprozesses, ausgeführt von mindestens einem Hardwareprozessor, um Folgendes zu tun:
Empfangen (520) einer Anfrage eines Clients zum Ausführen einer Operation, wobei die Anfrage ein Token mit einer Ablauffrist umfasst;
Erstellen eines Tracking-Schlüssels für die Anfrage;
Versenden (521) der Anfrage nach Verarbeitung und
Übermitteln (522) einer Antwort an den Client als Reaktion auf die Annahme der Anfrage, wobei die Antwort eine Antwort-Zeitverzögerung, den Tracking-Schlüssel und einen Ort zum Abfragen eines Anfrage-Status nach abgelaufener Antwort-Zeitverzögerung umfasst; und
eine Statusprüfer-API, ausgeführt von mindestens einem Hardwareprozessor, um Folgendes zu tun:
Empfangen (523) einer Statusprüfung für die Anfrage vom Client, basierend auf der Antwort-Zeitverzögerung und auf dem Ort zum Abfragen, wobei die Statusprüfung den Tracking-Schlüssel umfasst;
Prüfen des Status der Anfrage mithilfe des Tracking-Schlüssels;
Extrahieren (524) eines neuen Tokens aus der Statusprüfung, da das neue Token zum Ausführen der Anfrage notwendig ist, und
Senden (525) einer Antwort auf die Statusprüfung mit einem aktuellen Status der Anfrage.

2. System nach Anspruch 1, ferner umfassend:
einen Hintergrund-Anfrage-Prozessor, der von dem mindestens einen Hardwareprozessor ausgeführt wird, wobei der Hintergrund-Anfrage-Prozessor zu Folgendem dient:
Bestimmen, ob das Token vor Ausführung der Anfrage abgelaufen ist; und
als Reaktion auf die Bestimmung, dass das Token abgelaufen ist, Auffordern der Statusprüfer-API, das neue Token aus der empfangenen Statusprüfung zu erhalten und das neue Token zum Ausführen der Anfrage zu verwenden; und
eine Speicherung zum Speichern des Tokens, des neuen Tokens, des Tracking-Schlüssels und des aktuellen Status der Anfrage.

3. System nach Anspruch 2, wobei die Statusprüfer-API den bei der Statusprüfung empfangenen Tracking-Schlüssel mit dem im Speicher gespeicherten Tracking-Schlüssel vergleicht, wobei der Tracking-Schlüssel zunächst als Reaktion auf die empfangene Anfrage im Speicher gespeichert wird, um den Status der Anfrage zu prüfen.

4. System nach Anspruch 2, wobei der Hintergrund-Anfrage-Prozessor den aktuellen Status der Anfrage im Speicher aktualisiert.

5. System nach Anspruch 2, wobei der Hintergrund-Anfrage-Prozessor zum Bestimmen, ob das Token vor der ausgeführten Anfrage abgelaufen ist, Folgendes tun muss:
bestimmen, ob das Token abgelaufen ist; oder
bestimmen, ob die Geltungsdauer des Tokens ausreicht, um die Anfrage abzuschließen.

6. System nach Anspruch 1, wobei das Token und das neue Token vor der Verarbeitung der Anfrage und vor der Statusprüfung validiert werden.

7. System nach Anspruch 6, wobei das Token in einem Prozess der Identitäts- und Zugriffsverwaltung für mindestens eines von Authentifizierung, AuthN, und Autorisierung, AuthZ, validiert wird.

8. System nach Anspruch 1, wobei die Anfrage von einem Kunden eines Cloud-Anbieters stammt und eine Bestellung von Ressourcen beim Cloud-Anbieter umfasst.

9. System nach Anspruch 1, wobei die Anfrage eine Anfrage nach Ausführung der Operation durch eine in einer Cloud gehostete Anwendung umfasst.

10. System nach Anspruch 1, wobei zum Extrahieren eines neuen Tokens aus der Statusprüfung, da das neue Token zum Ausführen der Anfrage notwendig ist, die Statusprüfer-API das neue Token als Reaktion auf eine Aufforderung seitens eines Hintergrund-Anfrageprozessors aus der Statusprüfung extrahiert.

11. Computerimplementiertes Verfahren zum Verwalten der Ausführung einer Anfrage, die über die Ablauffrist des Tokens hinaus andauert, in einem asynchronen Anfrage-Antwort-Muster, wobei das Verfahren Folgendes umfasst:
Empfangen (520) einer Anfrage von einem Client zum Ausführen einer Operation an einer Anwendungsprogramm-Schnittstelle, API, eines Arbeitsprozesses, wobei die Anfrage ein Token mit Ablauffrist umfasst;
Versenden (521) der Anfrage nach Verarbeitung;
Übermitteln (522) einer Antwort an den Client, welche die Annahme der Antwort zur Verarbeitung angibt, wobei die Antwort eine Zeitverzögerung und einen Ort zum Abfragen eines Anfrage-Status nach abgelaufener Antwort-Zeitverzögerung umfasst,
wobei der Abfrageort sich vom Ort der Arbeitsprozess-API unterscheidet;
Empfangen (523) einer Statusprüfung für die Anfrage vom Client am Abfrageort, basierend auf der Antwort-Zeitverzögerung;
Extrahieren (524) eines neuen Tokens aus der Statusprüfung, zumindest basierend auf dem abgelaufenen Token; und
Übermitteln (525) einer Antwort auf die Statusprüfung mit einem aktuellen Anfrage-Status an den Client.

12. Computerimplementiertes Verfahren nach Anspruch 11, wobei der Abfrageort eine Statusprüfer-API umfasst und das Verfahren ferner Folgendes umfasst:
Bestimmen, durch die Statusprüfer-API, ob das Token vor der ausgeführten Anfrage abgelaufen ist; und
als Reaktion auf die Bestimmung, dass das Token abgelaufen ist, das Auffordern der Statusprüfer-API, das neue Token aus der empfangenen Statusprüfung zu erhalten, um die Anfrage auszuführen.

13. Computerimplementiertes Verfahren nach Anspruch 12, das Folgendes umfasst:
Speichern des neuen Tokens und des aktuellen Anfrage-Status in einem für die Statusprüfer-API zugänglichen Speicher und
Abrufen des aktuellen Anfrage-Status durch die Statusprüfer-API zur Bereitstellung für den Client.

14. Computerimplementiertes Verfahren nach Anspruch 13, das Folgendes umfasst:
Speichern eines Tracking-Schlüssels im Speicher als Reaktion auf die empfangene Anfrage vom Client an der Arbeitsprozess-API, wobei der gespeicherte Tracking-Schlüssel das anschließende Prüfen des Anfrage-Status ermöglicht.

15. Computerimplementiertes Verfahren nach Anspruch 11, wobei die Anfrage von einem Kunden eines Cloud-Anbieters stammt und eine Bestellung von Ressourcen beim Cloud-Anbieter umfasst.

## Revendications

1. Système permettant de gérer l'exécution d'une requête qui dépasse l'expiration de jeton dans un modèle de requête-réponse asynchrone, le système comprenant :
au moins un processeur matériel ;
une interface de programme d'application de processus de travail, API, exécutée par l'au moins un processeur matériel pour :
recevoir (520) une requête provenant d'un client pour effectuer une opération, la requête comprenant un jeton avec une date d'expiration ;
créer une clé de suivi pour la requête ;
poster (521) la requête de traitement ; et
transmettre (522) une réponse au client en réponse à l'acceptation de la requête, la réponse comprenant un délai de réponse, la clé de suivi et un emplacement pour interroger un état de la requête après l'expiration du délai de réponse ; et
une API de vérification d'état exécutée par l'au moins un processeur matériel pour :
recevoir (523) une vérification d'état pour la requête du client en fonction du délai de réponse et de l'emplacement à interroger, la vérification d'état comprenant la clé de suivi ;
vérifier l'état de la requête à l'aide de la clé de suivi ;
extraire (524) un nouveau jeton de la vérification d'état en fonction du nouveau jeton nécessaire pour exécuter la requête ; et
envoyer (525) une réponse à la vérification de statut avec un statut actuel de la requête.

2. Système selon la revendication 1, comprenant en outre :
un processeur de requête en arrière-plan exécuté par l'au moins un processeur matériel, le processeur de requête en arrière-plan servant à :
déterminer si le jeton a expiré avant l'exécution de la requête ; et
en réponse à la détermination de l'expiration du jeton, demander à l'API du vérificateur d'état d'obtenir le nouveau jeton à partir de la vérification d'état reçu et d'utiliser le nouveau jeton pour exécuter la requête ; et
une mémoire pour stocker le jeton, le nouveau jeton, la clé de suivi et l'état actuel de la requête.

3. Système selon la revendication 2, dans lequel l'API de vérification d'état compare la clé de suivi reçue dans la vérification d'état avec la clé de suivi stockée dans la mémoire, la clé de suivi étant initialement stockée dans la mémoire en réponse à la réception de la requête, afin de vérifier l'état de la requête.

4. Système selon la revendication 2, dans lequel le processeur de requête en arrière-plan met à jour l'état actuel de la requête dans a mémoire.

5. Système selon la revendication 2, dans lequel, pour déterminer si le jeton a expiré avant l'exécution de la requête, le processeur de requête en arrière-plan doit :
déterminer si le jeton est expiré ; ou
déterminer si le jeton dispose d'un bail suffisant pour répondre à la requête.

6. Système selon la revendication 1, dans lequel le jeton et le nouveau jeton sont validés avant le traitement de la requête et la vérification de l'état.

7. Système selon la revendication 6, dans lequel le jeton est validé pour au moins une authentification, AuthN, et une autorisation, AuthZ, dans un processus de gestion d'identité et d'accès.

8. Système selon la revendication 1, dans lequel la requête provient d'un locataire d'un fournisseur de nuage et la requête comprend une commande de ressources auprès du fournisseur de nuage.

9. Système selon la revendication 1, dans lequel la requête comprend une requête pour que l'opération soit effectuée par une application hébergée dans un nuage.

10. Système selon la revendication 1, dans lequel, pour extraire un nouveau jeton de vérification d'état sur la base du nouveau jeton nécessaire pour exécuter la requête, l'API de vérification d'état extrait le nouveau jeton de la vérification d'état en réponse à une invite provenant d'un processeur de requête en arrière-plan.

11. Procédé mis en oeuvre par ordinateur pour gérer l'exécution d'une requête qui dépasse l'expiration d'un jeton dans un modèle de requête-réponse asynchrone, le procédé comprenant :
la réception (520) d'une requête provenant d'un client pour effectuer une opération sur une interface de programme d'application de processus de travail, API, dans lequel la requête comprend un jeton avec une date d'expiration ;
la publication (521) de la requête de traitement ;
la transmission (522) d'une réponse au client indiquant que la réponse est acceptée pour traitement, la réponse comprenant un délai de réponse après et un emplacement pour interroger un état de la requête après l'expiration du délai de réponse après,
dans lequel l'emplacement d'interrogation est différent de l'emplacement de l'API du processus de travail ;
la réception (523) d'une vérification d'état de la requête du client à l'emplacement d'interrogation en fonction de la période de réponse après ;
l'extraction (524) d'un nouveau jeton à partir de la vérification d'état en se basant au moins sur le fait que le jeton a expiré ; et
la transmission (525), au client, d'une réponse à la vérification d'état avec un état actuel de la requête.

12. Procédé mis en oeuvre par ordinateur selon la revendication 11, dans lequel l'emplacement d'interrogation comprend une API de vérification d'état, et le procédé comprend en outre :
la détermination, par l'API du vérificateur d'état, si le jeton a expiré avant l'exécution de la requête ; et
en réponse à la détermination de l'expiration du jeton, inviter l'API du vérificateur d'état à obtenir le nouveau jeton à partir de la vérification d'état reçu pour exécuter la requête.

13. Procédé mis en oeuvre par ordinateur selon la revendication 12, comprenant :
le stockage du nouveau jeton et l'état actuel de la requête dans une mémoire accessible par l'API de vérification d'état ; et
la récupération, par l'API de vérification d'état, de l'état actuel de la requête à fournir au client.

14. Procédé mis en oeuvre par ordinateur selon la revendication 13, comprenant :
le stockage d'une clé de suivi dans la mémoire en réponse à la réception de la requête provenant du client au niveau de l'API du processus de travail, la clé de suivi stockée facilitant la vérification ultérieure de l'état de la requête.

15. Procédé mis en oeuvre par ordinateur selon la revendication 11, dans lequel la requête provient d'un locataire d'un fournisseur de nuage et la requête comprend une commande de ressources auprès du fournisseur de nuage.
